# EUROPEAN PATENT SPECIFICATION

(11) **EP 1 057 668 B1**
(45) Date of publication and mention of the grant of the patent: **11.01.2006**
(21) Application number: 00111250.7
(22) Date of filing: 25.05.2000
(51) Int. Cl.: B60H 1/00

(54) **Heating and air-conditioning installation**
Heizungs- und Klimaanlage
Installation de chauffage et de climatisation

(30) Priority: 02.06.1999 DE 19925443
(43) Date of publication of application: 06.12.2000
(73) Proprietor: Valeo Klimasysteme GmbH, 96476 Rodach (DE)
(72) Inventor: Riehl, Horst, 96476 Rodach (DE); Khelifa, Noureddine, 96450 Coburg (DE)
(74) Representative: Lemaire, Marc

(56) References cited:
- EP-A- 0 999 078
- FR-A- 2 624 067
- US-A- 5 537 956
- US-A- 5 678 410

## Description

### Field of the invention

The invention relates to a heating and air-conditioning installation for a vehicle.

### Background of the invention

A heating and air-conditioning installation for a vehicle usually comprises a heating circuit, connected to the engine coolant circuit, and a thermodynamic secondary circuit, used for cooling purposes, which has both an evaporator used as a heat sink and a waste heat exchanger.

The requirements for the air-conditioning of vehicles have increased constantly in recent years. More precisely, modern heating and air-conditioning installations for vehicles need a fast response time in order to provide sufficient heating power under virtually all driving situations. In order to achieve this, it has become common in recent years to use electrical heaters, which are provided as so-called reheaters, e.g. in the form of a PTC heating register. These electrical heaters are occasionally also used to fulfill the function of heating while the vehicle is stopped.

The thermodynamic secondary circuit, used for cooling purposes, is usually driven by using a mechanically powered compressor, which delivers and compresses the refrigerating fluid. In order to provide sufficient cooling power even at low engine speeds or when the engine is switched off, electrically powered compressors have also been proposed in recent years, which are usually switched for the vehicle alternator-battery circuit.

In order not to put excessive load on the electrical network of the vehicle, it has also been proposed in this context (internal prior art) to power the compressor electrically by using a fuel cell. Document EP-A-0999078 discloses an installation according to the preamble of claim 1.

European Published Application number 0638712 has disclosed a possible way of integrating a fuel cell in a coolant circuit belonging to the vehicle, in order to make it possible to supplement the heating power provided by the vehicle with the waste heat from the fuel cell.

However, none of the solutions known to date makes it possible satisfactorily to give heating and air-conditioning of the vehicle which is independent of the situation of the vehicle.

A primary object of the invention is to at least partially mitigate the difficulties of the prior art.

It is an object of embodiments of the present invention to provide an independent heating and air-conditioning installation for a vehicle, which allows the temperature of the interior of the vehicle to be regulated satisfactorily with high efficiency.

A further object of embodiments of the present invention is to provide an independent heating and air-conditioning installation, which can be integrated in the vehicle irrespective of the way in which the latter is powered, in particular as a retrofit assembly for an existing vehicle.

### Summary of the invention

According to the invention, as defined by claim 1, there is provided an independent heating and air-conditioning installation having a fuel cell, said fuel cell being used as a source of electricity and heat, said fuel cell being directly connected to a delivery and/or compression device of a thermodynamic circuit, with a coolant circuit assigned to the fuel cell and being directly connected to at least one further fluid circuit supplying at least one useful heat exchanger.

Put another way, a combined heat and power system is proposed, which guarantees temperature regulation independent of the situation and nature of the vehicle with high efficiency. Since currently available fuel cells are usually cooled by deionized water, in particular in order to avoid short-circuiting the fuel cell, the solution proposed according to the invention further provides the advantage that it is possible to obtain complete fluidic decoupling from any system that there may be for cooling the vehicle engine.

The heating and air-conditioning installation advantageously comprises a waste heat exchanger, which may optionally be supplied with a further fluid. The waste heat exchanger can be used to avoid excessive heating of the fuel cell. As an alternative and/or in addition, the waste heat exchanger may also be used, when cooling is taking place, to dissipate the heat arising in the refrigerating circuit. In order to reduce the number of components, the waste heat exchanger may be supplied both with a fluid from the heating and air-conditioning installation and with a fluid from the engine-cooling system of the vehicle, so that the amount of fitting required can be reduced by shared use of the plate structure.

In a preferred embodiment, the useful heat exchanger can be designed as a heat store. The storage of heat which is not needed for regulating the temperature of the passenger compartment actually makes it possible, e.g. for an internal combustion engine, to provide improved operating parameters in the starting phase. The heat store can also be used to keep the fuel cell at its operating temperature when the heating and air-conditioning installation is switched off.

The useful heat exchanger, or one of the useful heat exchangers, is advantageously a radiator which is used for heating air and may optionally also be supplied with a further fluid, e.g. the coolant belonging to the engine. When so-called high-temperature fuel cells, or fuel cells that are operated at medium temperatures, are employed, the waste heat from the fuel cell can hence be used directly for heating purposes.

In a preferred embodiment, the useful heat exchanger, or one of the useful heat exchangers, is a fluid/fluid heat exchanger or a fluid/fluid/air heat exchanger. When it is designed as a fluid/fluid heat exchanger, the opportunity hence exists to feed the waste heat from the fuel cell with little loss into a thermodynamic circuit designed as a heat pump. When it is configured as a fluid/fluid/air heat exchanger, on the other hand, the opportunity exists to couple a fuel cell in a straightforward way to a reversible thermodynamic circuit, which can be operated either as a heat-pump circuit or as a refrigerating circuit. In a preferred embodiment, the thermodynamic circuit is therefore designed to be reversible, e.g. by designing the delivery and/or compression device to be reversible. As an alternative, the reversible configuration of the thermodynamic circuit may also be obtained by means of corresponding control elements, e.g. in the form of several multi-way valves.

In a further preferred embodiment, the fuel cell is connected to an electrical heater, in particular a PTC heating register. During heating operation, the thermal power of the fuel cell can hence be used to preheat air, which is then brought to the desired temperature by using a PTC heating register, it being possible for some of the electrical power made available by the fuel cell to be used in the PTC heating register.

Lastly, it is preferable for the electricity generated in the fuel cell to be used to power a wide variety of secondary units, e.g. fans, control instruments and switching elements.

### Brief description of the drawings

Further advantages and features of the present invention will be found in the following detailed, purely exemplary description of a few currently preferred purely illustrative embodiments. The description is provided with reference to the appended drawings, in which:
Fig. 1 shows a basic representation of a first preferred embodiment of the independent heating and air-conditioning installation for a vehicle according to the invention.
Fig. 2 shows a similar representation to Fig. 1 of a second preferred embodiment, in which the thermodynamic heating circuit is designed to be reversible.
Fig. 3 shows a further preferred embodiment of the independent heating and air-conditioning installation according to the invention, in a view similar to Figs. 1 and 2, the thermodynamic circuit being switchable between cooling mode and heating mode.

### Description of the preferred embodiments

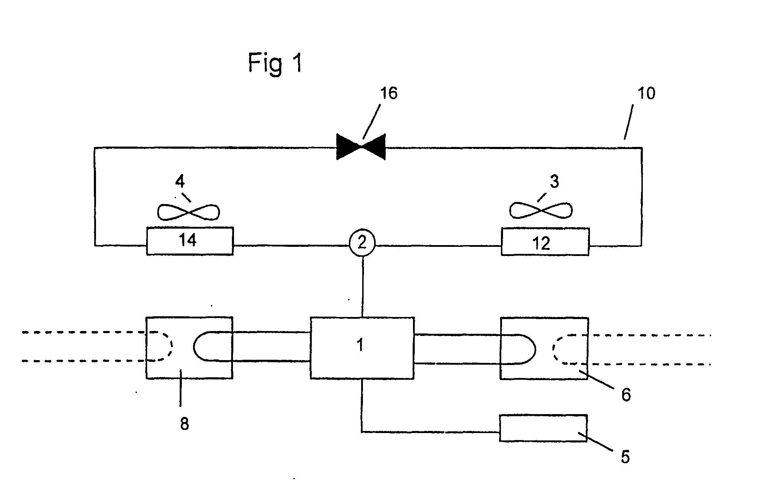

Referring now to Fig. 1, this figure represents an independent heating and air-conditioning installation for a vehicle. The heating and air-conditioning installation comprises a fuel cell 1 as a source of electricity and heat. The fuel cell 1 is connected to a delivery and/or compression device 2 of a thermodynamic circuit 10. The thermodynamic circuit 10 comprises, in the usual way, an evaporator 12 used for cooling, a relaxation device 16 and a heat exchanger 14. The evaporator 12 and the heat exchanger 14 may optionally be blown by fans 3, 4.

The fuel cell 1 can selectively act, via allocated coolant circuits, on a heat exchanger 6 used for heating purposes and/or on a waste heat exchanger 8. The waste heat exchanger 8 may optionally also be designed as a heat store. As represented by broken lines, both the useful heat exchanger 6 and the waste heat exchanger 8 can be used as interfaces with a coolant circuit belonging to the engine. Lastly, the fuel cell 1 is also connected to an electrical heater 5, in the form of a PTC heating register in the embodiment which is represented.

The different operating modes of the independent heating and air-conditioning installation for a vehicle according to the embodiment which is represented will be briefly outlined below.

When heating power is needed in order to regulate the temperature of the interior passenger compartment, the fuel cell is supplied with fuel from a reservoir (not shown), and generates electricity and heat. The heat that is generated can be transferred via the heat exchanger 6 to air which is blown by the fan 3. The slightly preheated air leaving the heat exchanger 6 is then brought to the desired temperature by means of the PTC heating register 5 supplied by the fuel cell 1.

When cooling of the vehicle interior is desired, then the electricity provided by the fuel cell 1 is used to power the compressor 2 of the thermodynamic circuit 10. The refrigerating power needed to regulate the temperature of the interior passenger compartment is hence made available in the evaporator 12. The heat evolved by the fuel cell 1 during the generation of electricity is then, for example, stored in the heat store 8 for so-called reheat operation or for regulating the temperature either of the fuel cell or of another vehicle power unit. In the embodiment which is represented, the heat store 8 is also provided with a heat-exchanger function, in order to be able to give off heat to the surrounding air if need arises, should the fuel cell become too hot.

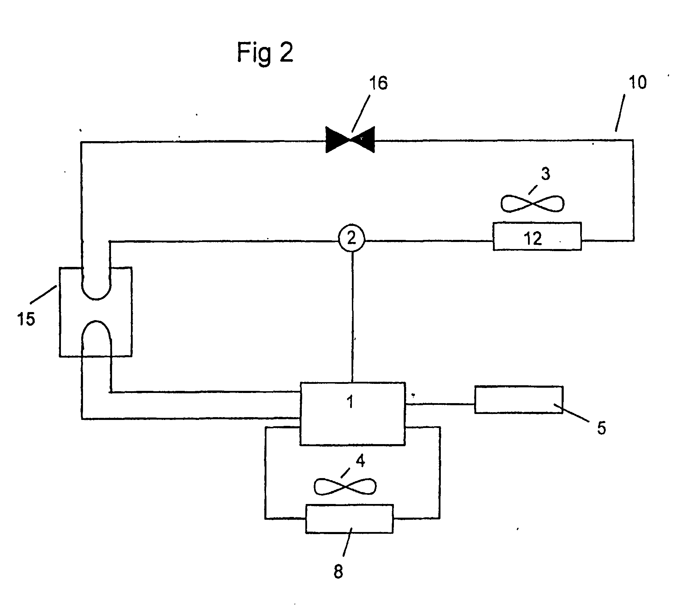

In the embodiment which is represented in Fig. 2, a fuel cell 1 is once more used as a source of electricity and heat. As in the case of the embodiment which is represented in Fig. 1, the fuel cell 1 is connected in order to power a delivery and/or compression device 2 of a thermodynamic circuit 10. In contrast to the embodiment which is represented in Fig. 1, however, the thermodynamic circuit 10 is designed to be reversible. Accordingly, the thermodynamic circuit 10 can firstly be used, in the conventional way, as a refrigerating circuit and, as an alternative, it can function as a heat pump in heating operation. In order to make it possible to fulfill both functions, a fluid/fluid/air heat exchanger 15 is provided, which can take heat from the thermodynamic circuit 10 in cooling operation and can transfer heat from the cooling circuit of the fuel cell 1 to the thermodynamic circuit 10 in heating operation.

As in the previous embodiment, the fuel cell 1 may additionally act on a heat store and/or exchanger 8. Further, just as in the previous embodiment, a PTC heating register 5 may be provided as a reheat device. Besides the interconnection with the delivery and/or compression device 2 of the thermodynamic circuit 10 and with the PTC heating register 5, it is also possible for further electronic or electrical units to be supplied by the fuel cell 1, e.g. the fans 3, 4 which are represented.

When heat is then needed in order to regulate the temperature of the vehicle interior, the fuel cell 1 is supplied with fuel, in order to act on the delivery and/or compression device 2 in such a way that the thermodynamic circuit 10 works like a heat pump. As the low-temperature level for the thermodynamic circuit 10, the fluid/fluid/air heat exchanger 15 is supplied with coolant from the fuel cell 1. The heating power provided by the fuel cell is then accordingly available in the heat exchanger 12 at a higher temperature level in order to heat the air passing through, which can optionally be heated yet further afterwards by means of the PTC heating register 5.

In cooling operation, the fuel cell 1 does not act on the fluid/fluid/air heat exchanger 15. Instead, the fluid/fluid/air heat exchanger 15 gives off waste heat from the thermodynamic circuit 10 to the surrounding air in the conventional way. In order to avoid overheating, and in order to make it possible to use the waste heat from the fuel cell in cooling mode as well, a heat store and/or heat exchanger 8 in which, in cooling mode, heat can be stored or, if need arises, can be given off to the surrounding air, is provided as in the embodiment which is shown in Fig. 1.

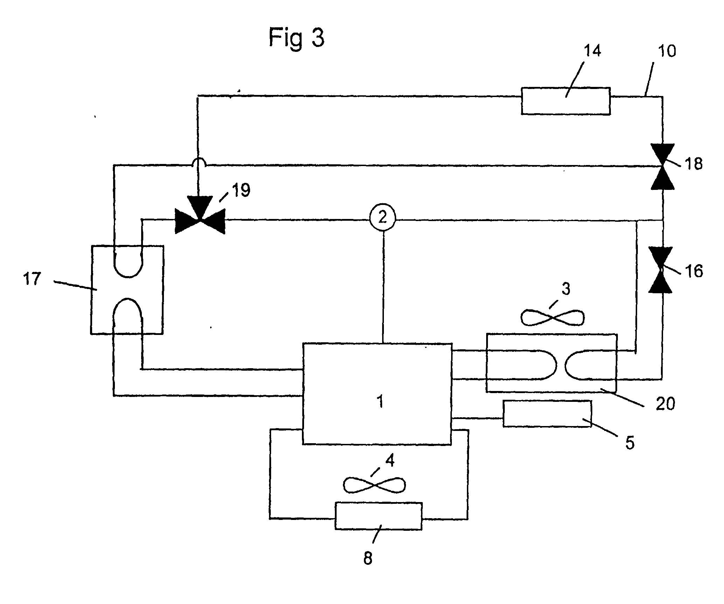

Lastly, Fig. 3 represents a third preferred embodiment of the independent heating and air-conditioning installation according to the invention, which essentially combines the concepts of the first two embodiments with one another, with the thermodynamic circuit 10 additionally being designed to be branched, in order to be selectively switchable for the heating or cooling mode.

In contrast to the embodiment which is represented in Fig. 2, a fluid/fluid heat exchanger 17 is provided instead of the fluid/fluid/air heat exchanger. In this embodiment, a combined heat exchanger/evaporator 20 is used to regulate the temperature of the air to be fed into the passenger compartment. In order to make it possible to switch the thermodynamic circuit 10 between cooling and heating mode, two three-way valves, which can be switched in accordance with the requirements for temperature regulation, are provided in the embodiment which is shown.

When the embodiment which is shown in Fig. 3 is being used for heating, then the control valves 18, 19 are switched in such a way that the fluid of the thermodynamic circuit 10 is applied only to the heat exchangers 17 and 20, while it is applied only to the heat exchangers 20, 14 in cooling mode.

In the case of the embodiment which is shown in Fig. 3, the waste heat from the fuel cell 1 can hence be used directly in the heat exchanger 20 in heating mode, with alternative or additional air heating by means of the thermodynamic circuit 10, used as a heat pump, with subsequent final heating by means of a PTC heating register 5. In cooling mode, the embodiment which is shown in Fig. 3 is operated in a similar way to the embodiment which is shown in Fig. 1.

In summary, it may be said that the present invention provides an independent heating and air-conditioning installation independent of the situation of the vehicle. The heating and air-conditioning installation according to the invention can optionally be combined with the coolant circuit of the vehicle, in order to minimize the number of heat exchangers which are needed. In any event, a significant increase in efficiency is achieved through the combined use of electricity and heat generated by the fuel cell. With the storage of surplus or unneeded heat from the fuel cell, it is possible to achieve optimized starting response both of the fuel cell and of the overall vehicle by means of reheat operation.

## Claims

1. An independent heating and air-conditioning installation having a fuel cell (1), said fuel cell (1) being used as a source of electricity and heat, **characterized in that** said fuel cell (1) is directly connected to a delivery and/or compression device (2) of a thermodynamic circuit (10), with a coolant circuit assigned to the fuel cell (1) and is directly connected to at least one further fluid circuit supplying at least one useful heat exchanger (6).

2. The heating and air-conditioning installation of claim 1, having a waste heat exchanger (8), which may optionally be supplied with at least one further fluid.

3. The heating and air-conditioning installation of claim 1, in which a said useful heat exchanger (6) is designed as a heat store.

4. The heating and air-conditioning installation of claim 1, in which a said useful heat exchanger (6) is a radiator which is used for heating air.

5. The heating and air-conditioning installation of claim 1, in which a said useful heat exchanger (6) is a fluid/fluid heat exchanger or a fluid/fluid/air heat exchanger.

6. The heating and air-conditioning installation of claim 5, in which the thermodynamic circuit (10) is designed to be reversible.

7. The heating and air-conditioning installation of claim 1, in which the fuel cell (1) is connected to an electrical heater (5), in particular a PTC heater.

8. The heating and air-conditioning installation of claim 1, in which the fuel cell is connected to further electrical units (3; 4), in particular to fans.

## Patentansprüche

1. Unabhängige Heiz- und Luftkühlanlage, die eine Brennstoffzelle (1) umfasst, wobei die besagte Brennstoffzelle (1) als eine Strom- und Heizquelle eingesetzt wird, **dadurch gekennzeichnet, dass** die besagte Brennstoffzelle (1) direkt mit einer Versorgungs-und/oder Kompressionseinheit (2) eines thermodynamischen Kreises (10) verbunden ist, mit einem der Brennstoffzelle (1) zugewiesenen kühlenden Kreislauf, und direkt mit zumindest einem weiteren Fluidkreis, der zumindest einen nutzbaren Wärmetauscher (6) versorgt, verbunden ist.

2. Heiz- und Luftkühlanlage nach Anspruch 1, die einen Abwärmetauscher (8) aufweist, der optional mit zumindest einem weiteren Fluid versorgt werden kann.

3. Heiz- und Luftkühlanlage nach Anspruch 1, in welcher ein besagter nutzbarer Wärmetauscher (6) als ein Wärmespeicher ausgestaltet ist.

4. Heiz- und Luftkühlanlage nach Anspruch 1, in der ein besagter nutzbarer Wärmetauscher (6) ein Heizkörper ist, der zum Heizen von Luft eingesetzt wird.

5. Heiz- und Luftkühlanlage nach Anspruch 1, in der ein besagter nutzbarer Wärmetauscher (6) ein Fluid-/Fluid-Wärmetauscher oder ein Fluid-/Fluid-/Luft-Wärmetauscher ist.

6. Heiz- und Luftkühlanlage nach Anspruch 5, in der der thermodynamische Kreis (10) ausgestaltet ist, um umkehrbar zu sein.

7. Heiz- und Luftkühlanlage nach Anspruch 1, in der die Brennstoffzelle (1) an ein elektrisches Heizgerät (5), insbesondere an ein PTC-Heizgerät, angeschlossen ist.

8. Heiz- und Luftkühlanlage nach Anspruch 1, in der die Brennstoffzelle (1) an weitere elektrische Einheiten (3; 4), insbesondere an Lüfter, angeschlossen ist.

## Revendications

1. Installation indépendante de chauffage et climatisation ayant une pile à combustible (1), ladite pile à combustible (1) étant utilisée en tant que source d'électricité et chaleur, **caractérisée en ce que** ladite pile à combustible (1) est directement raccordée à un dispositif de distribution et/ou compression (2) d'un circuit thermodynamique (10), avec un circuit de refroidissement assigné à la pile à combustible (1) et directement raccordé à au moins un autre circuit de fluide alimentant au moins un échangeur de chaleur utile (6).

2. Installation de chauffage et climatisation selon la revendication 1, ayant un échangeur de chaleur perdue (8), qui peut facultativement être alimenté avec au moins un autre fluide.

3. Installation de chauffage et climatisation selon la revendication 1, dans laquelle ledit échangeur de chaleur utile (6) est conçu en tant qu'accumulateur de chaleur.

4. Installation de chauffage et climatisation selon la revendication 1, dans laquelle ledit échangeur de chaleur utile (6) est un radiateur qui est utilisé pour chauffer de l'air.

5. Installation de chauffage et climatisation selon la revendication 1, dans laquelle ledit échangeur de chaleur utile (6) est un échangeur de chaleur fluide/fluide ou un échangeur de chaleur fluide/fluide/air.

6. Installation de chauffage et climatisation selon la revendication 5, dans laquelle le circuit thermodynamique (10) est conçu pour être réversible.

7. Installation de chauffage et climatisation selon la revendication 1, dans laquelle la pile à combustible (1) est raccordée à un dispositif de chauffage électrique (5), en particulier un dispositif de chauffage à CTP.

8. Installation de chauffage et climatisation selon la revendication 1, dans laquelle la pile à combustible est raccordée à d'autres unités électriques (3 ; 4), en particulier à des ventilateurs.
